# DEMANDE DE BREVET EUROPEEN

(11) **EP 0 818 422 A1**
(43) Date de publication de la demande: **14.01.1998**
(21) Numéro de dépôt: 97401692.5
(22) Date de dépôt: 11.07.1997
(51) Int. Cl.: C02F 3/16, B01F 3/04

(54) **Dispositif de récupération et de recyclage de mousse dans une cuve de traitement d'un liquide**

(30) Priorité: 12.07.1996 FR 9608772
(71) Demandeur: COMPAGNIE INTERNATIONALE DE SERVICES ET D'ENVIRONNEMENT C.I.S.E. INTERNATIONALE, F-92400 Courbevoie (FR)
(72) Inventeur: Boulant, Alain, 44500 La Baule (FR)
(74) Mandataire: Lanceplaine, Jean-Claude

(57) **Abrégé**

L'invention a pour objet un dispositif de récupération et de recyclage de mousse dans une cuve (1) de traitement d'un liquide, du type comprenant un arbre vertical (5) entraîné en rotation et disposé à l'intérieur de la cuve (1) et des moyens (4) de brassage du liquide dans la cuve (1). Le dispositif comporte une couronne (11) verticale et fixe, une hélice (13) d'aspiration du liquide et de la mousse, solidaire en rotation de l'arbre (5), un premier organe anti-vortex (14) disposé dans la couronne fixe (11) et au-dessus de l'hélice (13), un second organe anti-vortex (15) disposé au-dessous de l'hélice (13) d'aspiration, des moyens (16) de réglage du débit de liquide et de mousse aspiré par ladite hélice (13) et des moyens (17) de régulation du niveau de liquide dans la cuve (1).

## Description

La présente invention a pour objet un dispositif de récupération et de recyclage de mousse dans une cuve de traitement d'un liquide, comme par exemple les effluents graisseux extraits des effluents urbains d'eaux usées.

Comme on le sait, les effluents urbains d'eaux usées qui circulent dans les canalisations d'évacuation telles que les égouts, sont recueillis dans des stations d'épuration dans lesquelles sont effectuées diverses opérations de traitement afin de les épurer avant de les renvoyer dans le milieu naturel.

Cette épuration produit des sous produits liés à l'épuration comme de la graisse, des boues...

Or, les décharges acceptent de moins en moins ce type de produits, de telle sorte que les stations d'épuration doivent être maintenant capables de les traiter pour les limiter au maximum.

Ainsi, les graisses piégées à l'entrée de la station d'épuration sont déversées dans une cuve de traitement, comme par exemple une cuve de dégradation biologique, qui comporte un agitateur mécanique permettant de brasser le liquide.

De plus, la cuve peut comporter intérieurement et à sa partie inférieure des rampes d'injection dans le liquide d'air sous pression permettant d'aérer et d'accentuer le brassage du liquide.

On connaît également dans le FR-A-2 721 229, un dispositif d'aération et de brassage d'un liquide dans une cuve, comme par exemple des effluents graisseux extraits des effluents urbains d'eaux usées, qui comprend, à l'intérieur de ladite cuve :
- une cheminée verticale s'étendant sur une partie de la hauteur de la cuve,
- un arbre vertical entraîné en rotation et disposé à l'intérieur de la cheminée,
- des moyens de brassage du liquide solidaires en rotation avec l'arbre,
- et des moyens d'injection d'un gaz sous pression dans la cheminée.

Mais, lors du traitement du liquide comme par exemple les effluents graisseux, avec ces différents dispositifs, il se forme à la surface du liquide une couche importante de mousse qui s'envole et pollue l'environnement si bien qu'il est nécessaire de prévoir des moyens permettant d'éliminer cette mousse flottant à la surface du liquide lors du traitement de ce liquide.

Jusqu'à présent, ces moyens sont constitués par des agitateurs disposés au niveau de la surface du liquide et destinés à rabattre la mousse.

Mais, ces agitateurs ne donnent pas entièrement satisfaction et une partie de la mousse s'envole et pollue l'environnement.

L'invention a pour but d'éviter ces inconvénients en proposant un dispositif qui permet, par des moyens simples et consommant peu d'énergie, de récupérer et de recycler de manière efficace la mousse flottant à la surface d'un liquide dans une cuve de traitement de ce liquide.

L'invention a donc pour objet un dispositif de récupération et de recyclage de mousse dans une cuve de traitement d'un liquide, comme par exemple les effluents graisseux extraits des effluents urbains d'eaux usées, du type comprenant un arbre vertical entraîné en rotation et disposé à l'intérieur de la cuve et des moyens de brassage du liquide dans ladite cuve et solidaires en rotation avec ledit arbre, caractérisé en ce qu'il comporte :
- une couronne verticale et fixe, disposée autour de l'arbre et au-dessous de la surface du liquide dans la cuve,
- une hélice d'aspiration du liquide et de la mousse flottant à la surface dudit liquide, solidaire en rotation de l'arbre et disposée à l'intérieur de la couronne fixe,
- un premier organe anti-vortex disposé dans la couronne fixe et au-dessus de l'hélice d'aspiration,
- un second organe anti-vortex disposé au-dessous de l'hélice d'aspiration,
- des moyens de réglage du débit de liquide et de mousse aspiré par ladite hélice,
- et des moyens de régulation du niveau de liquide dans la cuve.

Selon d'autres caractéristiques de l'invention :
- les moyens de réglage du débit de liquide et de mousse aspiré par ladite hélice sont formés par une collerette disposée autour de la couronne fixe et dont la position par rapport à ladite couronne fixe est réglable verticalement,
- la collerette comporte au niveau de son bord supérieur une succession de parties en saillie et en creux,
- les moyens de régulation du niveau de liquide dans la cuve sont formés par un tuyau de trop plein disposé verticalement entre la paroi de la cuve et la collerette et dont la position est réglable verticalement.

D'autres caractéristiques et avantages de l'invention apparaîtront au cours de la description qui va suivre, faite en référence aux dessins annexés, sur lesquels :
- la Fig. 1 est une vue schématique en coupe d'un premier mode de réalisation d'une cuve de traitement d'un liquide munie d'un dispositif de récupération et de recyclage de la mousse selon l'invention,
- la Fig. 2 est une vue en coupe selon la ligne 2-2 de la Fig. 1,
- la Fig. 3 est une vue en coupe selon la ligne 3-3 de la Fig. 1,
- la Fig. 4 est une vue schématique en perspective de la collerette de réglage du débit de liquide et de mousse dans l'hélice d'aspiration du dispositif selon l'invention,
- la Fig. 5 est une vue schématique en coupe des moyens de régulation du niveau de liquide dans la cuve de traitement,
- la Fig.6 est une vue schématique en coupe d'un second mode de réalisation d'une cuve de traitement d'un liquide munie du dispositif de récupération et recyclage de la mousse selon l'invention.

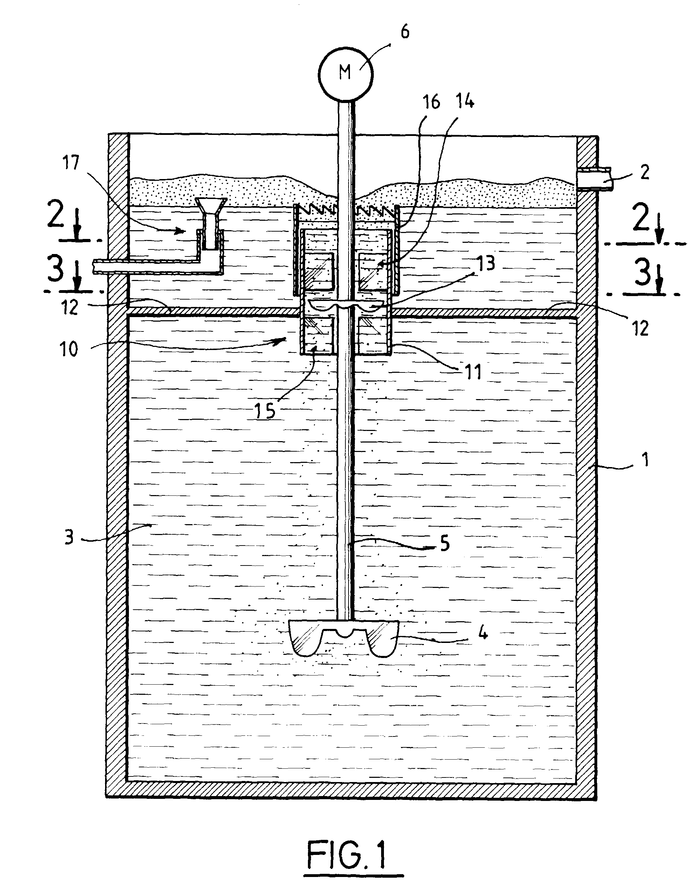

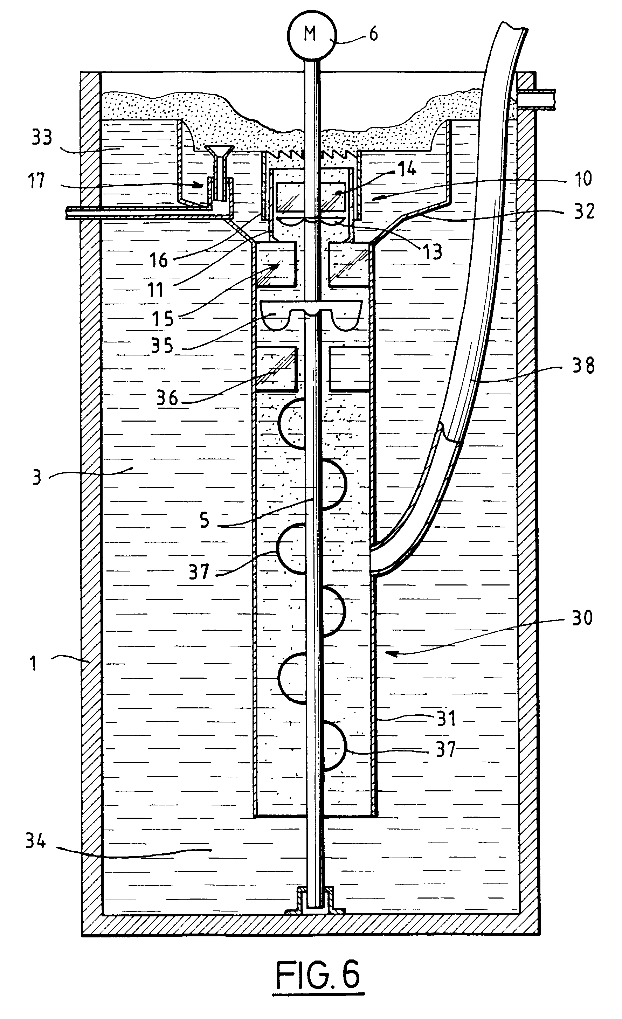

Sur les Figs. 1 et 6, on a représenté une cuve 1 munie à sa partie supérieure d'un orifice 2 d'entrée d'un liquide 3 à traiter, comme par exemple des effluents graisseux extraits des effluents urbains d'eaux usées.

La cuve 1 est pourvue de moyens de brassage du liquide 3 qui dans l'exemple de réalisation représenté à la Fig.1, sont constitués par une hélice 4 fixée à l'extrémité d'un arbre vertical 5 entraîné en rotation par un moto-réducteur 6.

Lors du brassage du liquide 3 par l'hélice 4 à l'intérieur de la cuve 1, il se forme à la surface de ce liquide 3 une couche importante de mousse.

Pour éviter que cette mousse s'envole et pollue l'environnement, la cuve 1 est équipée d'un dispositif de récupération et de recyclage de ladite mousse dans le liquide 3 à l'intérieur de la cuve 1.

Ce dispositif de récupération et de recyclage de la mousse désigné dans son ensemble par la référence 10, est formé par une couronne 11 verticale et fixe, disposée autour de l'arbre 5 et au-dessous de la surface du liquide 3 dans la cuve 1.

Cette couronne 11 est reliée à la paroi interne de la cuve 1 par des moyens appropriés, comme par exemple des pattes 12 ménageant entre elles des passages pour le liquide 3.

Le dispositif 10 de récupération et de recyclage de la mousse comporte également une hélice 13 d'aspiration du liquide et de la mousse à l'intérieur de la couronne fixe 11.

Cette hélice 13 est solidaire en rotation de l'arbre 5 et disposée à l'intérieur de la couronne fixe 11.

Le diamètre de l'hélice 13 est légèrement inférieur au diamètre intérieur de la couronne fixe 11.

Un premier organe anti-vortex 14 est disposé à l'intérieur de la couronne 11 et au-dessus de l'hélice d'aspiration 13 pour éviter la rotation du liquide 3 dans ladite couronne 11.

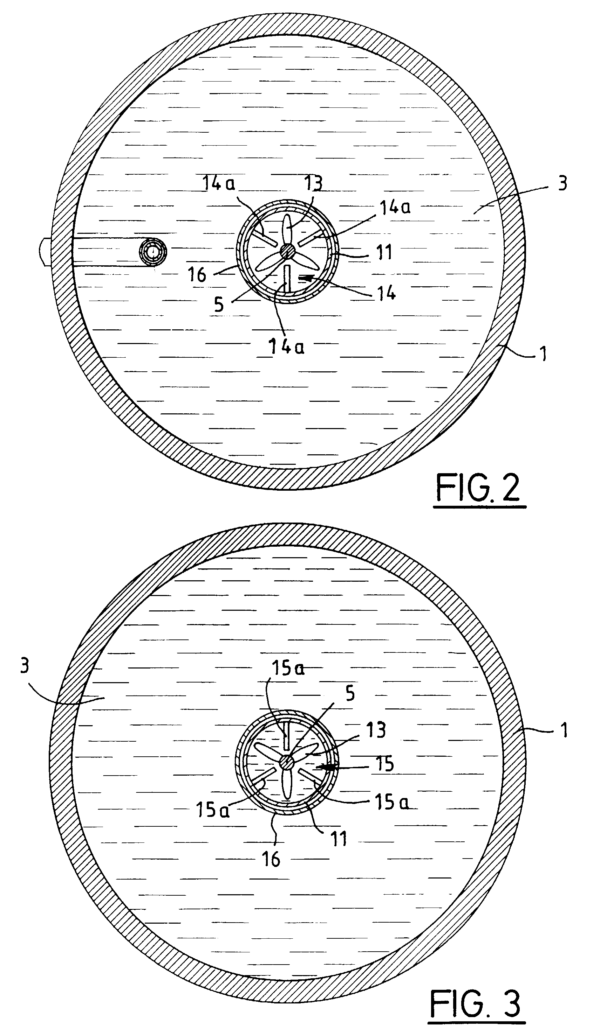

Ainsi que représenté à la Fig. 2, cet organe anti-vortex 14 est constitué par trois plaques verticales 14a réparties à 120° à l'intérieur de la couronne 11.

Un second organe anti-vortex 15 est disposé dans la couronne fixe 11 et au-dessous de l'hélice d'aspiration 13.

Comme représenté à la Fig. 3, cet organe anti-vortex 15 est également constitué de trois plaques verticales 15a réparties à 120° à l'intérieur de la couronne 11.

De plus, le dispositif de récupération et de recyclage de la mousse comporte également des moyens de réglage du débit de liquide et de mousse aspiré par l'hélice 13 et des moyens de régulation du niveau de liquide 3 dans la cuve 1.

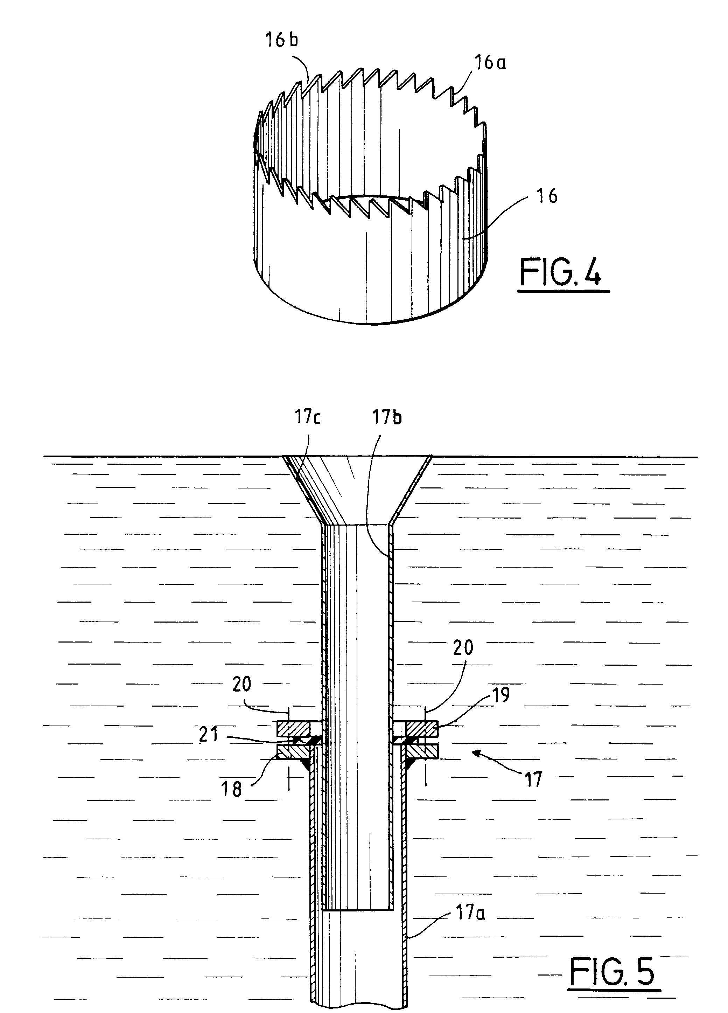

Ainsi que représenté sur les Figs. 1 et 4, les moyens de réglage du débit de liquide et de mousse aspiré par l'hélice 13 sont formés par une collerette 16 disposée autour de la couronne fixe 11.

La position de la collerette 16 par rapport à la couronne fixe 11 est réglable verticalement par des moyens appropriés, non représentés.

Comme représenté à la Fig. 4, la collerette 16 comporte au niveau de son bord supérieur une succession de parties en saillie 16a et en creux 16b qui forment par exemple des dents ou des créneaux.

Les moyens de régulation du niveau de liquide dans la cuve 1 sont formés par un tuyau de trop plein 17 disposé verticalement entre la paroi de la cuve 1 et la collerette 16.

Ainsi que représenté à la Fig. 5, ce tuyau de trop plein 17 comporte une première portion de tuyau 17a fixe et une seconde portion de tuyau 17b mobile verticalement par rapport à la première portion de tuyau 17a et munie à sa partie supérieure d'un entonnoir 17c.

Pour permettre le déplacement de la seconde portion de tuyau 17b, l'extrémité supérieure de la première portion 17a comporte une première bride 18 soudée sur ladite extrémité de la première portion de tuyau 17a et une seconde bride 19 libre et reliée à la première bride 18 par des boulons 20.

Entre les brides 18 et 19 est fixé un joint 21 en matériau souple ayant la forme d'une rondelle.

Ce joint 21 en matériau souple possède un diamètre intérieur légèrement inférieur au diamètre extérieur de la seconde portion de tuyau 17b de telle manière que ce joint 21 frotte sur la paroi extérieure de ladite seconde portion de tuyau 17b et maintienne cette seconde portion de tuyau 17b dans la position désirée.

Lors du traitement du liquide 3 dans la cuve 1, le moto-réducteur 6 entraîne en rotation l'arbre 5 qui entraîne l'hélice de brassage 4 et l'hélice d'aspiration 13.

Le brassage du liquide 3 par l'hélice 4 provoque la formation de mousse à la surface du liquide 3 dans la cuve 1.

La rotation de l'hélice 13 à l'intérieur de la couronne 11 provoque un pompage au niveau de la surface du liquide 3 et une aspiration de la mousse flottant à la surface du liquide ainsi qu'une chute de niveau dans la collerette 16, comme représenté à la Fig. 1.

La mousse est donc entraînée, noyée et mélangée au liquide 3 à l'intérieur de la cuve 1 ce qui permet de l'éliminer progressivement.

La position de la collerette mobile 16 ainsi que les parties en saillie 16a et en creux 16b ménagées sur le bord supérieur de ladite collerette 16 régule le débit de liquide et de mousse aspiré dans la couronne fixe 11 par l'hélice d'aspiration 13.

La position de la seconde portion de tuyau 17b par rapport au niveau du liquide 3 dans la cuve 1 permet de réguler ce niveau et d'évacuer le surplus de liquide vers un bac de stockage, non représenté.

Sur la Fig. 6, on a représenté un second mode de réalisation d'une cuve 1 de traitement d'un liquide 3 qui comporte un dispositif 10 de récupération et de recyclage de la mousse et un dispositif 30 d'aération et de brassage dudit liquide 3.

Le dispositif d'aération et de brassage 30 disposé à l'intérieur de la cuve 1 se compose d'une cheminée verticale 31 s'étendant sur une partie de la hauteur de ladite cuve 1 et ouverte à ses deux extrémités.

L'extrémité supérieure de la cheminée 31 est munie d'un entonnoir 32 évasé vers le haut et dont le bord supérieur ménage avec la paroi de la cuve 1 un espace libre 33 pour le passage du liquide 3.

L'extrémité inférieure de la cheminée 31 ménage avec le fond de la cuve 1 un passage 34 pour le liquide 3.

L'ensemble constitué par la cheminée 31 et l'entonnoir 32 est fixé à l'intérieur de la cuve 1 par des moyens appropriés, comme par exemple des pattes non représentées.

Le dispositif d'aération et de brassage du liquide 3 comporte également un arbre vertical 5 entraîné en rotation par un moto-réducteur 6.

Cet arbre 5 est disposé à l'intérieur et s'étend sur toute la hauteur de la cheminée 31.

L'arbre vertical 5 entraîne en rotation une hélice de pompage 35 disposée à l'intérieur de la cheminée 31 au-dessous de l'orifice supérieur de cette cheminée 31.

Le diamètre de l'hélice 35 est légèrement inférieur au diamètre intérieur de la cheminée 31.

Un organe anti-vortex 36 est disposé à l'intérieur de la cheminée 31 et au-dessous de l'hélice 35 pour éviter la rotation du liquide 3 dans ladite cheminée 31.

Cet organe anti-vortex 36 est constitué par trois plaques verticales réparties à 120° à l'intérieur de la cheminée 31.

L'arbre 5 porte également au-dessous de l'hélice de pompage 35, des moyens de brassage du liquide 3 solidaires en rotation avec ledit arbre 5 et disposés à l'intérieur de la cheminée 31.

Ces moyens de brassage du liquide 3 sont formés par exemple par plusieurs organes filiformes 37 formant chacun un arc dans un plan sensiblement vertical et répartis sur au moins une partie de la longueur dudit arbre 5 entre l'organe anti-vortex 36 et l'extrémité inférieure de la cheminée 31.

De plus, l'intérieur de la cheminée 31 est relié par une conduite 38 à des moyens d'injection d'un gaz sous pression comme par exemple de l'air à l'intérieur de ladite cheminée 31 et au-dessous de l'organe anti-vortex 36.

La cuve 1 représentée à la Fig.6 est également équipée d'un dispositif de récupération et de recyclage de la mousse flottant à la surface du liquide 3.

Ce dispositif de récupération et de recyclage de la mousse désigné dans son ensemble par la référence 10 est identique au précédent mode de réalisation et comporte :
- une couronne 11 verticale et fixe, disposée autour de l'arbre 5,
- une hélice 13 d'aspiration du liquide et de la mousse flottant à la surface dudit liquide 3, solidaire en rotation de l'arbre 5 et disposée à l'intérieur de la couronne fixe 11,
- un premier organe anti-vortex 14 disposé dans la couronne fixe 11 et au-dessus de l'hélice d'aspiration 13,
- un second organe anti-vortex 15 disposé dans le cheminée 31 et au-dessous de l'hélice d'aspiration 13,
- une collerette 16 disposée autour de la couronne fixe 11 et dont la position par rapport à ladite couronne fixe 11 est réglable verticalement,
- et un tuyau de trop plein 17 disposé verticalement entre l'entonnoir 32 de la cheminée 31 et la collerette 16.

La collerette 16 comporte au niveau de son bord supérieur une succession de portions en saillie 16a et en creux 16b (Fig. 4).

Le tuyau de trop plein 17 est également constitué par une première portion de tuyau 17a fixe et par une seconde portion de tuyau 17b déplaçable verticalement par rapport à ladite première portion de tuyau 17a (Fig. 5).

Dans ce mode de réalisation, l'hélice d'aspiration 13 possède un diamètre inférieur à l'hélice de pompage 35 et la couronne fixe 11 a un diamètre inférieur au diamètre de la cheminée 31.

Le premier organe anti-vortex 14 est constitué par trois plaques verticales 14a réparties à 120° à l'intérieur de la couronne fixe 11, comme représenté à la Fig. 2, et le second organe anti-vortex 15 est également constitué par trois plaques verticales 15a réparties à 120° à l'intérieur de la chemine 31.

Dans ce mode de réalisation, la couronne fixe 11 supportant le premier organe anti-vortex 14 est en appui sur les plaques 15a constituant le second organe anti-vortex 15 de manière à ménager entre l'extrémité supérieure de la cheminée 31 et l'extrémité inférieure de la couronne fixe 11 des passages pour le liquide 3 pompé par l'hélice 35.

Le liquide à traiter est déversé par l'orifice 2 dans la cuve 1 jusqu'à un niveau situé juste au-dessus du bord supérieur de l'entonnoir 32.

Le moto-réducteur 6 entraîne en rotation l'arbre 5 qui lui même entraîne en rotation l'hélice d'aspiration 13, l'hélice de pompage 35 et les organes filiformes 37.

Simultanément, le gaz sous pression est injecté dans la cheminée 31 par l'intermédiaire de la conduite 38.

La rotation de l'hélice 35 provoque un pompage du liquide 3 dans la cheminée 31 de telle sorte que ce liquide 3 circule en continue de haut en bas dans cette cheminée 31, puis passe par l'espace 34 et circule de bas en haut entre ladite cheminée 31 et la paroi interne de la cuve 1 et ainsi de suite.

Les organes anti-vortex 15 et 36 empêchent la rotation du liquide 3 dans la cheminée 31.

Les bulles de gaz sous pression se dispersent dans le liquide 3 à l'intérieur de la cheminée 31 et sous l'effet de la rotation des organes filiformes 37, le liquide 3 est brassé et les bulles de gaz se divisent en micro-bulles favorisant la dispersion du gaz et de ce fait l'aération du liquide 3.

Entre la paroi interne de la cuve 1 et la cheminée 31, les bulles de gaz accélèrent la remontée du liquide favorisant la circulation de ce liquide à l'intérieur de la cuve 1 ce qui permet d'améliorer le rendement.

Ainsi, le liquide à traiter passe plusieurs fois dans la cheminée 31 et subit donc plusieurs traitements d'oxygénation.

La mousse flottant à la surface du liquide 3 est, grâce à la rotation de l'hélice 13, entraînée, noyée et mélangée au liquide circulant dans la couronne fixe 11 et ensuite dans la cheminée 31 ce qui permet d'éliminer progressivement cette mousse et éviter qu'elle pollue l'environnement.

Le positionnement de la collerette 16 par rapport à la couronne fixe 11 ainsi que les parties en saillie 16a et en creux 16b ménagées sur le bord supérieur de ladite collerette 16 permettent de réguler le débit de liquide et de mousse aspiré par l'hélice 13.

De plus, le positionnement en hauteur du tuyau de trop plein 17 par rapport à la surface de liquide 3 dans la cuve 1 permet de réguler le niveau de ce liquide dans ladite cuve 1 et le surplus de ce liquide 3 s'évacue vers un bac de stockage, non représenté.

L'aspiration du liquide et de la mousse créée par la rotation de la vis 13 provoque une chute de niveau, à l'intérieur de l'entonnoir 32 et à l'intérieur de la collerette 16.

Le dispositif de récupération et de recyclage de la mousse selon l'invention s'applique par exemple au traitement de l'eau, des effluents urbains, des eaux usées industrielles, des graisses par biodégradation, des matières de vidange, à l'ozonation de l'eau par un gaz ozoné avec ou sans catalyseur, à la stabilisation des boues ou peut être utilisé en traitement thermophile.

Ce dispositif peut également être utilisé dans un réacteur fonctionnant en lit fluidisé.

## Revendications

1. Dispositif de récupération et de recyclage de mousse dans une cuve (1) de traitement d'un liquide (3), du type comprenant un arbre vertical (5) entraîné en rotation et disposé à l'intérieur de la cuve (1) et des moyens (4, 37) de brassage du liquide (3) dans la cuve (1) et solidaires en rotation avec ledit arbre (5), caractérisé en ce qu'il comporte :
- une couronne (11) verticale et fixe, disposée autour de l'arbre (5) et au-dessous de la surface du liquide (3) dans la cuve (1),
- une hélice (13) d'aspiration du liquide et de la mousse flottant à la surface dudit liquide, solidaire en rotation de l'arbre (5) et disposée à l'intérieur de la couronne fixe (11),
- un premier organe anti-vortex (14) disposé dans la couronne fixe (11) et au-dessus de l'hélice (13) d'aspiration,
- un second organe anti-vortex (15) disposé au-dessous de l'hélice (13) d'aspiration,
- des moyens (16) de réglage du débit de liquide et de mousse aspiré par ladite hélice (13),
- et des moyens (17) de régulation du niveau de liquide dans la cuve (1).

2. Dispositif selon la revendication 1, caractérisé en ce que les moyens de réglage du débit de liquide et de mousse aspiré par ladite hélice (13) sont formés par une collerette (16) disposée autour de la couronne fixe (11) et dont la position par rapport à ladite couronne fixe (11) est réglable verticalement.

3. Dispositif selon la revendication 2, caractérisé en ce que la collerette (16) comporte au niveau de son bord supérieur une succession de parties en saillie (16a) et en creux (16b).

4. Dispositif selon la revendication 1, caractérisé en ce que les moyens de régulation du niveau de liquide (3) dans la cuve (1) sont formés par un tuyau de trop plein (17) disposé verticalement entre la paroi de la cuve (1) et la collerette (16) et dont la position est réglable verticalement.
